**Europäisches Patentamt**

**European Patent Office**

**Office européen des brevets**

(19)

(11) Veröffentlichungsnummer: **0 141 924**
**B1**

(12) # EUROPÄISCHE PATENTSCHRIFT

(45) Veröffentlichungstag der Patentschrift:
07.10.87

(51) Int. Cl.⁴: **G 01 P 21/02**, G 01 P 3/66

(21) Anmeldenummer: **84109438.6**

(22) Anmeldetag: **08.08.84**

(54) **Verfahren zum Eichen einer Vo-Messeinrichtung.**

(30) Priorität: **19.08.83 CH 4525/83**

(43) Veröffentlichungstag der Anmeldung:
**22.05.85 Patentblatt 85/21**

(45) Bekanntmachung des Hinweises auf die Patenterteilung:
**07.10.87 Patentblatt 87/41**

(84) Benannte Vertragsstaaten:
**CH DE FR GB IT LI SE**

(56) Entgegenhaltungen:
**DE - A - 1 673 382**
**US - A - 2 929 019**
**US - A - 3 872 382**

**INSTRUMENTS AND EXPERIMENTAL TECHNIQUES,
Band 14, Nr. 3II, Mai/Juni 1971, Seiten 883,884, New
York, USA; G.P. PRUDKOVSKII et al.: "Determination of
the lines of force in axisymmetric magnetic fields"**

(73) Patentinhaber: **Werkzeugmaschinenfabrik
Oerlikon-Bührle AG, Birchstrasse 155, CH-8050 Zürich
(CH)**

(72) Erfinder: **Ettel, Godwin, Dipl.-Ing., Bettackerstrasse 11,
CH-8512 Glattbrugg (CH)**

## Beschreibung

Die Erfindung betrifft ein Verfahren zur Herstellung einer kalibrierten Vorrichtung zum Messen der Mündungsgeschwindigkeit eines Geschosses, das aus einer Feuerwaffe abgeschossen wird mit zwei Messspulen.

Bei einem bekannten Verfahren dieser Art (siehe DE-A-1673382) wird der elektrische Abstand der beiden Spulen im voraus bestimmt, indem ein Eichkörper nacheinander in diejenigen Lagen bezüglich jeder Spule gebracht wird, für welche das Ausgangspotential eines Demodulators gleich ist dem Auslösepotential eines Triggers, und indem die zwischen den beiden Lagen des Eichkörpers gemessene Distanz zur Berechnung der Anfangsgeschwindigkeit verwendet wird.

Dieses bekannte Eichverfahren hat den Nachteil, dass nach dem Eichen die Messspulen der $V_0$-Messeinrichtung nicht mehr ausgewechselt werden dürfen, oder mit anderen Worten, falls die Spulen ausgewechselt werden, muss die $V_0$-Messeinrichtung neu geeicht werden.

Die vorliegende Erfindung gemäss dem Patentanspruch bezweckt, diesen Nachteil zu vermeiden und ein Verfahren zum Eichen zu schaffen, bei dem die Messspulen beliebig ausgewechselt werden können, ohne dass die Messgenauigkeit der $V_0$-Messeinrichtung darunter leidet.

Es ist ferner eine Vorrichtung bekannt (siehe US-A-3872382), welche einen für die Feststellung der Homogenität des Magnetfeldes geeigneten Sensor aufweist. Dieser Sensor umfasst zwei Spulen, die koaxial angeordnet sind und gegensinnig gewickelt sind. Mit diesem Sensor lässt sich ein homogenes Feld nachweisen, da der Verlauf der Signalspannung in diesen Bereichen ein Minimum aufweist.

Ein Ausführungsbeispiel des erfindungsgemässen Verfahrens ist im folgenden, anhand der beigefügten Zeichnung, ausführlich beschrieben. Es zeigt:

Fig. 1 eine schematische Darstellung einer $V_0$-Messeinrichtung und

Fig. 2 eine Vorrichtung zur Bestimmung der Lage des magnetischen Schwerpunktes einer Messspule.

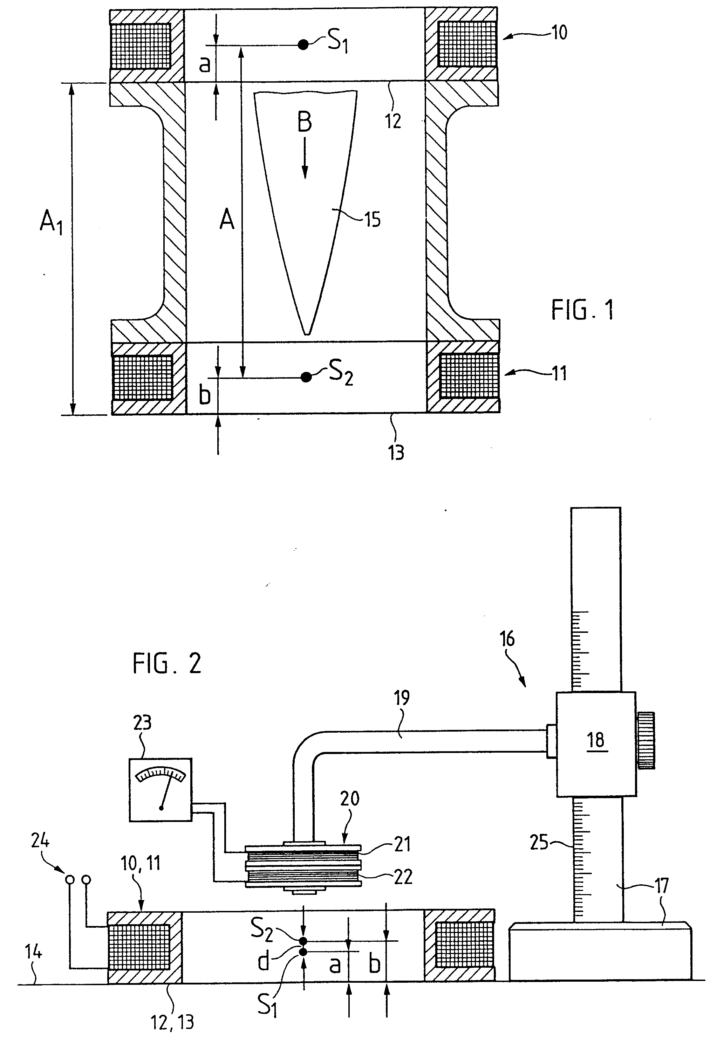

Gemäss Fig. 1 weist die $V_0$-Messeinrichtung zwei Messspulen 10 und 11 auf, durch welche ein Geschoss 15 in Richtung des Pfeiles B hindurch fliegt. In an sich bekannter Weise wird die Geschwindigkeit des Geschosses in folgender Weise gemessen. Beim Durchtritt des Geschosses 15 durch die erste Spule 10 wird ein erstes Signal induziert und beim Durchtritt des Geschosses 15 durch die zweite Spule 11 wird ein zweites Signal induziert. Aus dem Abstand A zwischen den beiden Spulen 10 und 11 und aus der Zeit t, die zwischen den beiden Signalen liegt, ergibt sich die Anfangsgeschwindigkeit $V_0 = A/t$ in Metern pro Sekunde.

Die beiden Messspulen 10 und 11 besitzen je eine mit 12 bzw. 13 bezeichnete Stirnfläche. Falls nur der Abstand $A_1$ zwischen diesen beiden Stirnflächen 12 und 13 gemessen und zur Berechnung der Anfangsgeschwindigkeit $V_0$ verwendet wird, dann kann es sein, dass die Messung fehlerhaft ist, und zwar aus folgendem Grunde: Falls an die beiden Messspulen 10 und 11 eine elektrische Spannung angelegt wird, entsteht bei jeder Messspule 10, 11 ein Magnetfeld. Diese Magnetfelder besitzen je einen magnetischen Schwerpunkt, der in Fig. 1 mit $S_1$ für die eine Messspule 10 und mit $S_2$ für die andere Messspule 11 bezeichnet ist.

Für eine genaue Messung der Anfangsgeschwindigkeit eines Geschosses 15 ist nur der Abstand A der beiden Schwerpunkte $S_1$ und $S_2$ der beiden Messspulen 10 und 11 von Bedeutung. Gemäss Fig. 1 befindet sich der Schwerpunkt $S_1$ der ersten Spule 10 im Abstand a von der Stirnfläche 12 der ersten Spule 10, und der Schwerpunkt $S_2$ der zweiten Spule 11 befindet sich im Abstand b von der Stirnfläche 13 der zweiten Spule 11. Wenn die beiden Spulen 10 und 11 genau gleich sind, müssten auch die Abstände a und b zwischen den Schwerpunkten $S_1$ und $S_2$ und den Stirnflächen 12 und 13 gleich sein. Dann müssten, wie aus Fig. 1 ersichtlich, $A_1$ und A gleich sein. Es hat sich nun gezeigt, dass dies nicht so ist und es daher notwendig ist, den Abstand A zwischen den beiden Schwerpunkten $S_1$ und $S_2$ zu bestimmen. Es wird nun vorgeschlagen den Abstand A zwischen den magnetischen Schwerpunkten $S_1$ und $S_2$ wie folgt zu bestimmen:

Zuerst wird gemäss Fig. 2 eine Messspule 10 auf eine Platte 14 gelegt. Auf dieser Platte 14 ist ein Höhenmessgerät 16 aufgestellt, das aus einem Ständer 17 und einem Schlitten 18 besteht, an dem über einem Träger 19 ein Sensor 20 befestigt ist. Dieser Sensor 20 weist zwei zueinander entgegengesetzt gewickelte Spulen 21 und 22 auf, die an einem Spannungsmessgerät 23 angeschlossen sind. Die Messspule 10 ist an eine Spannungsquelle 24 angeschlossen. Am Ständer 17 ist eine Skala 25 angebracht, an der die Lage des Schlittens 18 abgelesen werden kann.

Das an der Messspule 10 mit Hilfe der Spannungsquelle 24 erzeugte Magnetfeld induziert eine Spannung in den Spulen 21 und 22 des Sensors 20. Diese Spannung, welche am Spannungsmessgerät 23 abgelesen werden kann, ändert sich, wenn der Schlitten 18 mit dem Sensor 20 entlang dem Ständer 17 verschoben wird. Sobald der Sensor 20 sich im magnetischen Schwerpunkt $S_1$ befindet, wird das Spannungsmessgerät 23 ein Minimum anzeigen, worauf an der Skala 25 des Ständers 17 die Lage des magnetischen Schwerpunktes S der Messspule 10 abgelesen werden kann. Dabei ist zu beachten, dass der an der Skala 25 abgelesene Wert nicht mit dem in Fig. 2 eingezeichneten Wert a bzw. b, d.h. dem Abstand zwischen Platte 14 und Schwerpunkt $S_1$ übereinstimmt. Mit dem beschriebenen Höhenmessgerät 16 lässt sich der Abstand a des Schwerpunktes $S_1$ von der Stirnfläche 12 der Messspule 10 nicht bestimmen.

In der selben Weise kann die Lage des magnetischen Schwerpunktes $S_2$ der anderen Messspule 11 bestimmt werden. An der Skala 25 wird für die zweite Messspule 11 ein zweiter Wert abgelesen.

Die Differenz dieser beiden Werte entspricht dem mit d bezeichneten Wert in Fig. 2, welcher die Differenz der Abstände a und b der Schwerpunkte $S_1$ und $S_2$ von der Platte 14, d. h. von den Stirnflächen 12, 13 der Messspulen 10 und 11 dargestellt. Der Wert d entspricht dem Abstand der Schwerpunkte $S_1$ und $S_2$ voneinander, wenn die Messspulen 10, 11 nacheinander ausgemessen werden.

Aus Fig. 1 ist nun ersichtlich: $A_1 = A + b - a$.

Aus Fig. 2 ist ersichtlich: $b - a = d$,

folglich ist $A_1 = A - d$.

In der Praxis wird man sich z. B. von hundert Messspulen immer zwei heraussuchen, bei denen der Wert d verschwindet oder möglichst klein ist, so dass der Abstand A zwis ' ... den Schwerpunk ten $S_1$ und $S_2$ mit Abstand flächen 12 und 13 der N möglichst übereinstimmt, gleich A ist.

Es ist auch möglich, de den beiden magnetischen $S_2$ der Messspulen 10 und $V_0$-Messeinrichtung zu me: in die fertige Messeinrich Verschieben des Schlitten: auf dem Ständer 17 wird : punkt $S_1$ durch das Spanr anschliessend der andere zeigt, und auf der Skala 2 Abstand A abgelesen wer(

## Patentanspruch

1. Verfahren zur Herste Vorrichtung zum Messen digkeit eines Geschosses, fe abgeschossen wird, m.. ... .... , 11), deren Magnetfelder je einen magnetischen Schwerpunkt (S1, S2) aufweisen, der dadurch bestimmt ist, dass die Messspannung einer Messvorrichtung (16) mit zwei gegensinnig gewickelten, koaxial angeordneten Sensorspulen (21, 22) innerhalb der mit einer Spannungsquelle (24) verbundenen Messspulen (10, 11) ein Minimum ist, wobei dieses Verfahren folgende Verfahrensschritte umfasst:

– Ausmessen des Abstandes (a, b) bei einer Anzahl von Messspulen (10, 11) jeweils zwischen einer ihrer Stirnflächen (12, 13) und ihrem magnetischen Schwerpunkt (S1, S2) mit der Messvorrichtung mit zwei gegensinnig gewickelten, koaxial angeordneten Sensorspulen,

– Auswählen von zwei Messspulen (10, 11), welche annähernd denselben Abstand (a, b) zwischen der Stirnfläche (12, 13) und dem magnetischen Schwerpunkt aufweisen, und

– Anordnung dieser beiden Messspulen (10, 11) in koaxialer Lage und mit einem festen Abstand (A1) zwischen den Stirnflächen (12, 13).

## Revendication

Procédé pour réaliser un dispositif taré de mesure de la vitesse initiale d'un obus tiré par une arme à feu, comportant deux bobines de mesure (10, 11) dont le champ magnétique respectif présente chaque fois un centre de gravité magnétique ($S_1$) et ($S_2$) défini en ce que la tension mesurée par un dispositif de mesure (16) comportant deux bobines de capteur (21, 22) coaxiales mais à sens d'enroulement opposé et dont les bobines de mesure (10, 11) sont reliées à une source de tension (24) passent par un minimum, ce procédé comprenant les étapes suivantes:

– mesure de la distance a, b d'un certain nombre de bobines de mesure (10, 11) chaque fois entre l'une de leurs faces avant (12, 13) et le centre de gravité magnétique ($S_1$, $S_2$) correspondant à l'aide d'un dispositif de mesure comportant deux bobines de capteur disposées coaxialement et enroulées en sens opposé,

– sélection de deux bobines de mesure (10, 11) qui présentent sensiblement la même distance a, b entre la surface frontale (12, 13) et le centre de gravité magnétique, et

– montage de ces deux bobines magnétiques (10, 11) en position coaxiale et avec une distance fixe ($A_1$) entre les surfaces avant (12, 13).

## Claim

A method of assembling a calibrated muzzle velocity measuring device for determining the muzzle velocity of a projectile fired from a weapon, said muzzle velocity measuring device comprising two measurements coils (10, 11) having magnetic field foci (S1, S2) which are determined by introducing a sensor (20) having two coaxially and adjacently disposed opposingly wound sensing coils (21, 22) into said measurement coils (10, 11) connected to a power supply (24) as soon as said sensor (20) is situated in said magnetic field focus points (S1, S2) a voltmeter (23) will show a minimum, said method comprising the steps of:

– measuring the axial distance ($\underline{a}$ and $\underline{b}$) between an end surface (12, 13) and said magnetic field focus point (S1, S2) of a number of measurement coils (10, 11) with the help of said sensor (20) having two adjacently and coaxially disposed opposingly wound sensing coils (21, 22),

– selecting two measurement coils (10, 11) having approximately the same distance ($\underline{a}$ and $\underline{b}$) between said end surface (12, 13) and said magnetic field focus point (S1, S2), and

– arranging said two measurement coils (10, 11) in a position coaxially to one another with a fixed distance (A1) between their end surfaces (12, 13).

FIG. 1

FIG. 2